(19) Europäisches Patentamt
European Patent Office
Office européen des brevets

(11) EP 1 493 772 A1

(12) EUROPEAN PATENT APPLICATION
published in accordance with Art. 158(3) EPC

(43) Date of publication:
**05.01.2005 Bulletin 2005/01**

(21) Application number: **03712963.2**

(22) Date of filing: **26.03.2003**

(51) Int Cl.7: **C08G 75/02**

(86) International application number:
**PCT/JP2003/003679**

(87) International publication number:
**WO 2003/085034 (16.10.2003 Gazette 2003/42)**

(84) Designated Contracting States:
**AT BE BG CH CY CZ DE DK EE ES FI FR GB GR HU IE IT LI LU MC NL PT RO SE SI SK TR**

(30) Priority: **05.04.2002 JP 2002103745**

(71) Applicant: **IDEMITSU PETROCHEMICAL CO., LTD.**
**Tokyo 130-0015 (JP)**

(72) Inventor: **KOYAMA, Yoshinari**
**Ichihara-shi, Chiba 299-0107 (JP)**

(74) Representative:
**Gille Hrabal Struck Neidlein Prop Roos Patentanwälte,**
**Brucknerstrasse 20**
**40593 Düsseldorf (DE)**

# (54) METHOD AND APPARATUS FOR PURIFYING POLYARYLENE SULFIDE

(57) A method of purifying a polyarylene sulfide, including washing a polyarylene sulfide with a wash liquid, separating the resulting mixture into a polymer phase (8) containing the polyarylene sulfide and a solution phase (9) containing the wash liquid, measuring a viscosity of the polymer phase (8) or a difference in viscosity between the polymer phase (8) and the solution phase (9) to detect the liquid level (10) of the polymer phase (8), and taking out the polymer phase (8). The viscosity of the polymer phase (8) or the difference in density between the polymer phase (8) and the solution phase (9) is measured with a vibratile process viscometer (7) or remote seal type differential pressure oscillator (6) having a liquid-contact portion (11) constituted of stainless steel, a hastelloy alloy, Ti or a Ti alloy, so that the liquid level (10) of the polymer phase (8) can be accurately detected.

Fig.2

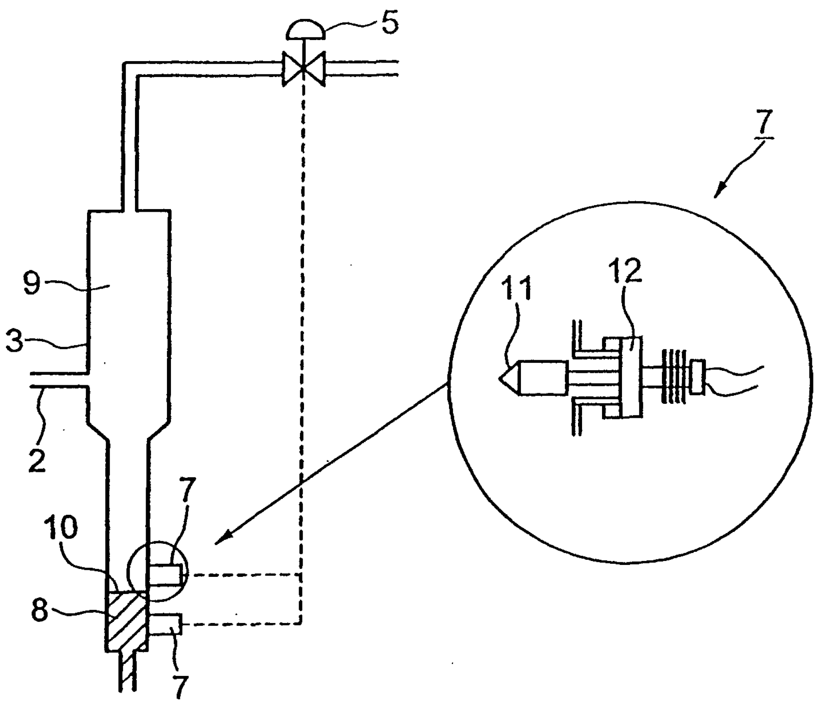


EP 1 493 772 A1

## Description

Technical Field

The present invention relates to a method for purifying a polyarylene sulfide and an apparatus for purifying the same. More specifically, it relates to a method for purifying a high-molecular-weight polyarylene sulfide useful particularly in electric-electronic fields and high-rigidity material fields and an apparatus for purifying the same.

Background Art

Polyarylene sulfide resins, a polyphenylene sulfide resin in particular, are known as engineering plastics that not only have excellent mechanical strength, heat resistance, etc., but also have particularly high rigidity, and they are useful as materials for electronic-electric machine parts and as various high-rigidity materials.

For the production of a polyarylene sulfide resin, conventionally, there is generally employed a method in which an alkali metal sulfide such as sodium sulfide, or the like and a halogenated aromatic compound such as p-dichlorobenzene, or the like are reacted in an aprotic organic solvent (solvent for polymerization) such as N-methyl-2-pyrrolidone (NMP), or the like.

In the above production method, however, by-produced sodium chloride is insoluble in the aprotic organic solvent and is hence taken into the resin, and there is therefore a problem that the removal thereof by washing procedures is difficult.

Further, the above production method involves a problem that it is very difficult to treat a formed polyarylene sulfide resin, by-produced sodium chloride, etc., continuously at high temperatures.

For overcoming these problems, therefore, JP-A-07-207027 proposes a method in which a polyarylene sulfide resin is produced in an aprotic organic solvent in the presence of lithium sulfide in place of sodium sulfide. In this production method, by-produced lithium chloride is soluble in NMP or other aprotic organic solvent, so that the concentration of lithium in the polyarylene sulfide can be relatively easily decreased by the washing procedure.

In the above production method, further, the formed polyarylene sulfide resin can be continuously treated at high temperatures.

In the above production method, however, a wash liquid is added to a reaction solution containing the polyarylene sulfide resin in a molten state and the aprotic organic solvent to carry out the washing procedure at high temperatures, so that there is inevitably required the step of separating a polymer phase of the polyarylene sulfide resin in a molten state and a liquid phase containing the aprotic organic solvent and the wash liquid. After they are separated, further, it is required to accurately detect the liquid level of the polymer phase for accurately transferring the polymer phase alone to a subsequent step or taking (removing) it from the system.

In the separation step, however, a corrosive liquid is treated under high-temperature and high-pressure conditions, so that it is impossible to use any level gauge generally used for measuring a liquid level (a glass gauge type level gauge, a float type level gauge, a purge type level gauge, a displacement type level gauge, etc.) in a unit for detecting the liquid level of the separated polymer phase.

Under the circumstances, the present inventor has found that a capacitance type liquid level detector can be used for detecting the liquid level of the polymer phase and has described so in JP-A-09-328551.

However, the present inventor has made further studies, and as a result it has come to be clear that since the above capacitance type liquid level detector uses a ceramic or Teflon (registered trademark) material as a material for an insulating portion, the lifetime of the insulating portion is decreased when the liquid level detector is used under high-temperature and high-pressure conditions or is brought into contact with the aprotic organic solvent having high solvent properties such as NMP, or the like.

Further, since the above capacitance type detector detects a portion where a voltage sharply changes, as a liquid level, the value indicated by the detector changes when the concentration of an electrolyte in the solution such as the concentration of lithium changes, so that it is not easy to accurately detect the liquid level of the polymer phase.

Further, since the above capacitance type liquid level detector is very expensive, it cannot be said that the detection of a liquid level therewith is the optimum method when a polyarylene sulfide is produced in a less expensive way.

In the method for the production of a polyarylene sulfide, therefore, it has been required to develop a method of highly accurately detecting the liquid level, which has durability against severe use environments.

The present invention has been made in the light of the above problems, and it is an object thereof to provide a method for purifying a polyarylene sulfide, which can stably give a high-quality polyarylene sulfide, and an apparatus for the purification.

For achieving the above object, the present inventors have made diligent studies and as a result have found that the above problems can be overcome by measuring a polyarylene sulfide phase for a viscosity, etc., to detect the liquid level of the polyarylene sulfide phase, and the present invention has been accordingly completed.

Disclosure of the Invention

According to a first aspect of the present invention, there is provided a method of purifying a polyarylene sulfide, which comprises washing a polyarylene sulfide with a wash liquid, separating the resulting mixture into a polymer phase containing the polyarylene sulfide and a solution phase containing the wash liquid, measuring a viscosity of the polymer phase or a difference in density between the polymer phase and the solution phase to detect the liquid level of the polymer phase, and taking out (removing) the polymer phase.

In the purification method of the present invention, preferably, the polymer phase is measured for a viscosity with a vibratile process viscometer. Further, preferably, the difference in density between the polymer phase and the solution phase is measured with a remote seal type differential pressure oscillator.

The material for the liquid-contact portion of the vibratile process viscometer or the remote seal type differential pressure oscillator is preferably an anti-corrosion material such as stainless steel, a hastelloy alloy, Ti or a Ti alloy.

According to a second aspect of the present invention, there is provided an apparatus for purifying a polyarylene sulfide, which comprises a separation vessel for separating a polymer phase containing a polyarylene sulfide and a solution phase containing a wash liquid after the polyarylene sulfide is washed with the wash liquid and a liquid level detector that is provided to the separation vessel and that is for measuring a viscosity of the polymer phase or a difference in density between the polymer phase and the solution phase to detect the liquid level of the polymer phase.

According to a third aspect of the present invention, there is provided a method for producing a polyarylene sulfide, which comprises reacting an alkali metal sulfide and a halogenated aromatic compound to produce a polyarylene sulfide, washing the polyarylene sulfide with a wash liquid, separating the resulting solution into a polymer phase containing the polyarylene sulfide and a solution phase containing the wash liquid, measuring a viscosity of the polymer phase or a difference in density between the polymer phase and the solution phase to detect the liquid level of the polymer phase and taking out the polymer phase.

According to a fourth aspect of the present invention, there is provided a method for detecting a liquid level, which comprises measuring a viscosity of a first liquid phase containing a polyarylene sulfide or a difference in density between the first liquid phase and a second liquid phase substantially free of any polyarylene sulfide to detect the liquid level that is an interface between the first liquid phase and the second liquid phase.

Brief Description of Drawings

Fig. 1 is a schematic drawing for showing one embodiment of an apparatus for producing a polyarylene sulfide.
Fig. 2 is a schematic drawing for showing a vibratile process viscometer.
Fig. 3 is a schematic drawing for showing a remote seal type differential pressure oscillator.

Best Modes for Carrying Out the Invention

The method for producing a polyarylene sulfide, the method for purifying a polyarylene sulfide and the method for detecting the liquid level thereof will be explained hereinafter.

In the present invention, the polyarylene sulfide is produced by reacting an alkali metal sulfide and a halogenated aromatic compound. The above alkali metal is particularly preferably lithium, and the above halogen is particularly preferably chlorine. For convenience, an explanation will be given below on the assumption that the polyarylene sulfide is produced from lithium sulfide and a chlorinated aromatic compound, while the following explanation can be applied to other alkali metals and halogens.

The method for producing a polyarylene sulfide, provided by the present invention, comprises the following steps (1) to (3) as described, for example, in Japanese Patent Application No. 2001-397493.

(1) Step of reacting lithium sulfide and a chlorinated aromatic compound in an aprotic organic solvent to form a polyarylene sulfide by polymerization (polymerization step).
(2) Step of washing the polyarylene sulfide with a wash liquid to separate the resulting mixture into a polymer phase containing the polyarylene sulfide and a solution phase containing the wash liquid (washing and separation step).
(3) Step of measuring a viscosity of the polymer phase or a difference in density between the polymer phase and the solution phase to detect the liquid level of the polymer phase and taking out the polymer phase (detection and taking out step).

(1) Polymerization step

The polymerization step preferably includes the following steps (a) to (c).

(a) Step of charging a liquid or gaseous sulfur compound into a system in which an aprotic organic solvent and either lithium hydroxide (LiOH) or lithium N-methylaminobutyrate (LMAB) are present.

(i) Aprotic organic solvent

The aprotic organic solvent for use in the present invention can be generally selected from aprotic polar organic compounds (e.g., amide compounds, lactam compounds, urea compounds, organic sulfur compounds and cyclic organic phosphorus compounds), and they can be suitably used as a sole solvent or as a solvent mixture.
Of these aprotic polar organic compounds, examples of the amide compounds include N,N-dimethylformamide, N,N-diethylformamide, N,N-dimethylacetamide, N,N-diethylacetamide, N,N-dipropylacetamide and N,N-diemthylbenzoic acid amide.
Examples of the lactam compounds include caprolactam, N-alkylcaprolactams such as N-methylcaprolactam, N-ethylcaprolactam, N-isopropylcaprolactam, N-isobutylcaprolactam, N-n-propylcaprolactam, N-n-butylcaprolactam and N-cyclohexylcaprolactam, N-methyl-2-pyrrolidone (NMP), N-ethyl-2-pyrrolidone, N-isopropyl-2-pyrrolidone, N-isobutyl-2-pyrrolidone, N-n-propyl-2-pyrrolidone, N-n-butyl-2-pyrrolidone, N-cyclohexyl-2-pyrrolidone, N-methyl-3-methyl-2-pyrrolidone, N-ethyl-3-methyl-2-pyrrolidone, N-methyl-3,4,5-trimethyl-2-pyrrolidone, N-methyl-2-piperidone, N-ethyl-2-piperidone, N-isopropyl-2-piperidone, N-methyl-6-methyl-2-piperidone and N-methyl-3-ethyl-2-piperidone.
Examples of the urea compounds include tetramethylurea, N,N'-dimethylethyleneurea and N,N'-dimethylpropyleneurea.
Further, examples of the organic sulfur compounds include dimethyl sulfoxide, diethyl sulfoxide, diphenyl sulfone, 1-methyl-1-oxosulfolane, 1-ethyl-1-oxosulfolane and 1-phenyl-1-oxosulfolane. Examples of the above cyclic organic phosphorus compounds include 1-methyl-1-oxophospholane, 1-n-propyl-1-oxophospholane and 1-phenyl-1-oxophospholane.
These various aprotic polar organic compounds can be used solely or as a mixture containing two or more compounds of these. Further, they can be used as aprotic organic solvents in the form of mixtures thereof with other solvent component that does not impair the object of the present invention.
Of these various aprotic organic solvents, N-alkylcaprolactams and N-alkylpyrrolidones are preferred, and N-methyl-2-pyrrolidone is particularly preferred.

(ii) Preparation of system in which LiOH or LMAB is present

The system in which an aprotic organic solvent and either lithium hydroxide (LiOH) or lithium N-methylaminobutyrate (LMAB) are present represents a system obtained by charging sodium hydroxide (NaOH) or the like into a site where lithium chloride (LiCl) and an aprotic organic solvent are present or a site where lithium chloride, N-methyl-2-pyrrolidone (NMP), an aprotic organic solvent and water are present. The method of preparation of these will be specially explained below.
In the preparation of the system where LiOH is present, a hydroxide of an alkali metal other than lithium or a hydroxide of an alkaline earth metal, such as sodium hydroxide, potassium hydroxide, magnesium hydroxide, or the like, is charged into the system for recovering Li ion present in an LiCl form in a reaction solution. Of these, sodium hydroxide is preferred.
The preparation of the system where LMAB is present is carried out by reacting lithium chloride, N-methyl-2-pyrrolidone and a (non-lithium) alkali metal hydroxide excluding lithium and feeding the non-lithium alkali metal hydroxide in the form of an aqueous solution, so that this reaction is carried out in the above solvent mixture system containing an aprotic organic solvent and water.
The above non-lithium alkali metal hydroxide can be selected from sodium hydroxide, potassium hydroxide, rubidium hydroxide, cesium hydroxide or a mixture of at least two members of these. Of these, sodium hydroxide and potassium hydroxide are preferred, and sodium hydroxide is particularly preferred. These non-lithium alkali metal hydroxides such as sodium hydroxide, etc., are not limited to pure products, and general industrial products can be suitably used.
In the present invention, the system where LiOH and LMAB are present may be prepared from LiOH and LMAB themselves without preparing LiOH or LMAB as described above.

(iii) Charging of liquid or gaseous sulfur compound

While the liquid or gaseous sulfur compound for use in the present invention is not specially limited, hydrogen sulfide can be suitably used.

By charging the above liquid or gaseous sulfur compound, the lithium hydroxide present in a solid form in the system is dissolved in a liquid portion in the system, and a non-lithium hydroxide solid substance alone remains in a solid form in the system.

Then, the non-lithium hydroxide solid substance remaining in a solid form, such as an alkali metal chloride or an alkaline earth metal chloride, may be separated. In this case, there can be employed a known method such as filtration with a filter G4 made of glass or centrifugal separation.

(b) Step of dehydrating obtained reaction product

While water equimolar to absorbed hydrogen sulfide is generated, it is preferred to carry out dehydration as much as possible for producing a polyarylene sulfide having a high molecular weight.

The dehydration procedure for use in the present invention is not specially limited. For example, a heating procedure or a distillation procedure can be employed.

The heating temperature is determined depending upon the gas-liquid equilibrium relationship of NMP - water. Generally, it is preferably 130°C to 205°C. When nitrogen ($N_2$) is simultaneously introduced by blowing, the dehydration can be carried out at 130°C or lower. Further, when it is carried out under reduced pressure, the temperature can be further decreased.

The dehydration can be carried out at any time so long as it is carried out before the charging of the chlorinated aromatic compound. It is preferred to carry out the dehydration simultaneously with the introduction of hydrogen sulfide by blowing, since the number of machines and devices required for unit operation can be decreased.

(c) Step of adjusting sulfur content, then charging chlorinated aromatic compound and carrying out polycondensation thereof

In this step, first, the reaction solution obtained in the above step is subjected to a desulfurization procedure, e.g., the procedure of removing hydrogen sulfide to adjust the sulfur content. That is, for allowing the chlorinated aromatic compound to react as will be described later, the ratio of sulfur/lithium present in the system is preferably adjusted to 1/2 or smaller (sulfur atom/Li atom molar ratio), and it is more preferably controlled so as to be 1/2. When the above ratio is greater than 1/2, the reaction does not easily proceed, so that it is difficult to generate a polyarylene sulfide. The method of controlling the sulfur/lithium ratio is not specially limited. For example, the sulfur compound such as hydrogen sulfide blown into the system for separating the alkali metal chloride or alkaline earth metal chloride is removed by bubbling nitrogen into a liquid portion of the system after the separation of the alkali metal chloride or alkaline earth metal chloride, whereby the total amount of sulfur in the system can be adjusted. In this case, the system may be warmed. Further, a lithium salt such as lithium hydroxide or lithium N-methylaminobutyrate (LMAB) may be added to the system for the controlling.

Then, the chlorinated aromatic compound is charged into the system and allowed to react to produce the polyarylene sulfide.

While the chlorinated aromatic compound for use in the present invention is not specially limited, examples thereof include dichlorobenzenes such as m-dichlorobenzene and p-dichlorobenzene; alkyl-substituted dichlorobenzenes or cycloalkyl-substituted dichlorobenzenes such as 2,3-dichlorotoluene, 2,5-dichlorotoluene, 2,6-dichlorotoluene, 3,4- dichlorotoluene, 2,5-dichloroxylene, 1-ethyl-2,5-dichlorobenzene, 1,2,4,5-tetramethyl-3,6-dichlorobenzene, 1-n-hexyl-2,5-dichlorobenzene and 1-cyclohexyl-2,5-dichlorohalobenzene; aryl-substituted dichlorobenzenes such as 1-phenyl-2,5-dichlorobenzene, 1-benzyl-2,5-dichlorobenzene and 1-p-toluyl-2,5-dichlorobenzene; dichlorobiphenyls such as 4,4'-dichlorobiphenyl; and dichloronaphthalenes such as 1,4-dichloronaphthalene, 1,6-dichloronaphthalene and 2,6-dichloronaphthalene. Of these, dichlorobenzenes are preferred.

In the polymerization step, lithium sulfide per se can be used without generating lithium sulfide by the steps (a) to (c). In this case, the above steps (a) and (b) and the adjustment of the sulfur content in the step (c) can be omitted.

In the present invention, preferably, the polyarylene sulfide is produced by a continuous polymerization method in the polymerization step in that the reaction easily proceeds and gives a polyarylene sulfide having a high molecular weight efficiently. In this case, a prepolymer of a polyarylene sulfide resin may be synthesized prior to the continuous polymerization, and the continuous polymerization may be carried out using the prepolymer.

(2) Step of washing and separating

In the washing and separating step, first, a reaction stopper such as $NH_4Cl$, HCl or the like is added to the reaction solution containing the polyarylene sulfide in a molten state and the aprotic organic solvent, obtained in the polymerization step, to terminate the polymerization, and then, a wash liquid such as an $H_2O$/NMP liquid mixture or the like is added to wash the polyarylene sulfide. When the washing procedure is carried out, by-produced lithium chloride is removed, so that the concentration of lithium in the formed polyarylene sulfide can be decreased. In the washing step, a mixture prepared by adding the reaction stopper to the wash liquid may be used to terminate the polymerization and wash the polyarylene sulfide at the same time.

After the polyarylene sulfide is washed, the thus-obtained mixture is separated into a polymer phase containing the polyarylene sulfide and a solution phase containing the aprotic organic solvent and the wash liquid. In this case, the polymer phase present on the lower phase side is constituted of a high-molecular-weight polyarylene sulfide in a molten state. And, the solution phase present on the upper phase side contains lithium chloride, a polyarylene sulfide oligomer, other by-produced product and the like.

(3) Step of detection and taking out

In the detection and taking out step, the viscosity of the polymer phase separated in the washing and separation step or the difference in density between the polymer phase and the solution phase is measured, to detect the liquid level of the polymer phase.

The viscosity of the polymer phase can be measured, for example, by means of a vibratile process viscometer. When the vibratile process viscometer is used, the polymer phase and the solution phase are measured for a viscosity each in advance, and the liquid level of the polymer phase is detected on the basis of the fact that the viscometer shows the viscosity of the polymer phase when immersed in the polymer phase and shows the viscosity of the solution phase when immersed in the solution phase. As a vibratile process viscometer, there can be employed, for example, a vibratile process viscometer XL/7-150 HT3 supplied by Hydramotion Limited in UK or the like.

The difference in density between the polymer phase and the solution phase can be measured, for example, with a remote seal type differential pressure detector. When the remote seal type differential pressure detector is used, the polymer phase and the solution phase are measured for a density each in advance, the differential pressure obtained from the solution phase alone is set at 0 %, the differential pressure obtained from the polymer phase alone is set at 100 %, and the liquid level of the polymer phase is taken as a liquid level on the basis of the fact that the level is indicated when the polymer phase is collected. As a remote seal type differential pressure detector, there can be employed, for example, a remote seal type differential pressure oscillator of JTE series supplied by Yamatake Industrial Systems Inc., or the like.

The material for the vibratile process viscometer and the remote seal type differential pressure detector is not specially limited so long as the liquid-contact portion thereof is made from a material having corrosion resistance against lithium halide, etc., i.e., a material that is substantially not dissolved into a polyarylene sulfide when brought into contact with a reaction solution containing lithium halide, and the like. However, stainless steel SUS316L, SCS14, SUS329J4L, etc., hastelloy alloy, Ti and Ti alloy are preferred, and hastelloy alloy, Ti and Ti alloy are more preferred. The material of the liquid-contact portion may be different from the material of portions other than the viscometer or the detector. Further, it may be different from the materials of a column vessel, a piping, a control valve, and the like.

In the present invention, it is essential to accurately detect the liquid level of the polymer phase separated in the washing and separating step. When the liquid level of the polymer phase is high, the amount of the polymer to be separated is large, and the residence time period of the polymer increases. As a result, the time period for which the polymer is exposed to high temperatures increases, and degradations such as a decrease in molecular weight, etc., take place. On the other hand, when the liquid level of the polymer phase disappears, the efficiency of washing the polymer phase is degraded, and by-produced lithium chloride comes to be included in the polymer and causes a detrimental effect on a product. When the liquid level of the polymer phase is detected, therefore, it is preferred to decrease the height of the liquid level of the polymer phase, for stably producing a high-quality polyarylene sulfide.

Further, it is known that a polyarylene sulfide causes coloring or forms a deteriorated substance when it suffers a heat history for a long period of time even in a state completely free from the effect of oxygen. In fields where a high-quality polyarylene sulfide is demanded, for example, the electric-electronic and precision fields, it is particularly essential to accurately detect the liquid level of the polymer phase.

In the present invention, the liquid level of the polymer phase is detected by a method using the above vibratile process viscometer or remote seal type differential pressure detector, and the liquid-contact portion is constituted of the anti-corrosion substance, so that the liquid level of the polymer phase can be accurately detected for a long period of time even if the separation procedure is carried out in the aprotic organic solvent having high dissolving power such as NMP, or the like, at high temperatures under high pressures.

In the present invention, further, the liquid level of the polymer phase can be accurately detected with the above vibratile process viscometer or remote seal type differential pressure detector, so that the operation can be carried out at a low liquid level of the polymer phase. As a result, the residence time period of the polymer phase can be controlled so that it is as small as possible, the time period for which the polymer phase is exposed to high temperatures can be minimized, and the decomposition of the polymer can be decreased, so that the polymer quality can be improved.

In the present invention, further, the liquid level of the polymer phase can be accurately detected, so that the liquid level fluctuation caused by external changes such as a pressure fluctuation can be minimized. As a result, the operation can be stabilized, and the stabilization of the polymer quality can be accordingly accomplished.

In the present invention, preferably, the washing step, the separation step and the detection step are repeated three or four times, and then the polyarylene sulfide is taken. By repeating the above steps, a high-quality polyarylene sulfide, for example, a polyarylene sulfide having a lithium concentration of 20 ppm or less can be obtained. However, the present invention can be also applied to a batch method.

The purification method or the purification apparatus of the present invention shall not be limited to the above method for producing a polyarylene sulfide, and they can be applied to all of methods for producing a polyarylene sulfide, which comprise the step of washing a polyarylene sulfide to purify the same in the process of the production method. Further, the method of detecting the liquid level, provided by the present invention, shall not be limited to the above method for producing a polyarylene sulfide, and it can be applied to a method of detecting an interface between a liquid phase containing a polyarylene sulfide and a liquid phase that substantially does not contain any polyarylene sulfide.

[Embodiment 1]

One embodiment of the present invention will be explained below with reference to drawings.

Fig. 1 is a schematic drawing showing one embodiment of an apparatus for producing a polyarylene sulfide in the present invention. Fig. 2 is a schematic drawing showing a vibratile process viscometer, and Fig. 3 is a schematic drawing showing a remote seal type differential pressure oscillator. In Figs. 2 and 3, the same or similar members as/to those in Fig. 1 are shown by the same reference numerals as those in Fig. 1, and explanations thereof will be omitted.

In Fig. 1, 1 indicates a reaction vessel, 2 indicates a piping of a transfer process, 3 indicates a still standing-separation vessel, 4 indicates a mixer, and 5 indicates a control valve.

The reaction vessel 1 and the still standing-separation vessel 3 are connected to each other through the piping 2 of a transfer process. Three such still standing-separation vessels 3 are continuously provided, and these are connected one to another through a piping 2. A mixer 4 is provided somewhere in each piping 2. Further, each still standing-separation vessel 3 is provided with a vibratile process viscometer 7 (not shown) shown in Fig. 2 or a remote seal type differential pressure oscillator 6 shown in Fig. 3, for detecting the liquid level of a polymer phase. The control valve 5 is provided in a line that is for taking a mixture of a reaction liquid with a wash liquid from a column top of the still standing-separation vessel 3, and it is linked with an output signal from a liquid level detector (vibratile process viscometer 5 or remote seal type differential pressure oscillator 6) to control the polymer liquid level of the still standing-separation vessel 3.

In Fig. 2, 7 indicates a vibratile process viscometer, 8 indicates a polymer phase, 9 indicates a solution phase, 10 indicates the liquid level of the polymer phase 8, 11 indicates a liquid-contact portion of the vibratile process viscometer 7, and 12 indicates a flange of the vibratile process viscometer 7.

A still standing-separation vessel 3 is provided with two vibratile process viscometers 7, and the liquid-contact portion 11 of each is in contact with the polymer phase 8 and/or the solution phase 9. The liquid-contact portions 11 are formed from an anti-corrosion material.

The above liquid-contact portion 11 of each vibratile process viscometer 7 is a portion that comes in contact with a reaction liquid/wash liquid present up to the flange 12.

In this Figure, two vibratile process viscometers 7 are provided to the still standing-separation vessel 3, while it is sufficient to provide at least one vibratile process viscometer 7. However, it is preferred to provide a plurality of the vibratile process viscometers 7 since the position of the liquid level 10 can be more definite.

In Fig. 3, 6 indicates a remote seal type differential pressure oscillator, 8 indicates a polymer phase, 9 indicates a solution phase, 10 indicates the liquid level of the polymer phase 8, 13 indicates a liquid-contact portion of the remote seal type differential pressure oscillator, and 14 indicates a flange of the remote seal type differential pressure oscillator 6.

The liquid-contact portion 13 is formed from an anti-corrosion material.

The above liquid-contact portion 13 of the remote seal type differential pressure oscillator 6 includes a diaphragm and is a portion that comes in contact with a reaction liquid/wash liquid present up to the flange 14.

Two ends of the remote seal type differential pressure oscillator 6 are respectively set to the still standing-separation vessel 3, the liquid-contact portion 13 of one end is in contact with the polymer phase 8, and the liquid-contact portion 13 of the other end is in contact with the solution phase 9.

The operation will be explained below.

In the reaction vessel 1, lithium sulfide and a halogenated aromatic compound are reacted in an aprotic organic solvent to produce a polyarylene sulfide.

A reaction liquid containing polyarylene sulfide, aprotic organic solvent, lithium halide, etc., is continuously discharged from the reaction vessel 1 formed of a single-stage CSTR (continuously stirring tower type reactor) through the piping 2, mixed with a reaction stopper and a wash liquid injected at an outlet from the reaction vessel 1 with the mixer 4, and transferred into the first still standing-separation vessel 3. By this washing, lithium halide contained in the polyarylene sulfide is eluted into the wash liquid.

In the first still standing-separation vessel 3, the reaction liquid and the wash liquid are allowed to stand and separated into the polymer phase 8 of the polyarylene sulfide and the solution phase 9 containing the aprotic organic solvent and the wash liquid on the basis of a difference in density. That is, as shown in Figs. 2 and 3, when the reaction liquid and the wash liquid flow into the still standing-separation vessel 3 through the piping 2 while they are in a mixed state, the polymer phase 8 having a greater density is allowed to stand and separated to the lower side of the still standing-separation vessel 3 and the solution phase 9 having a smaller density is allowed to stand and separated to the upper side of the still standing-separation vessel 3. The control valve 5 has control of the liquid level 10 of the polymer phase 8 in the still standing-separation vessel 3 while receiving an output signal from the liquid level detector 6 or 7 provided in the still standing-separation vessel 3.

When the position of the liquid level 10 of the polymer phase 8 moves upward, the provided liquid level detector 6 or 7 detects the liquid level 10 of the polymer phase 8. When the detected signal comes to show an upward tendency to be over an intended value, the control valve 5 is operated in the close direction. Then, the flow amount of the reaction liquid from the reaction vessel 1 into the still standing-separation vessel 3 is limited, which hence results in a decrease in the inflow of the polymer liquid, so that the liquid level 10 of the polymer phase 8 moves downward.

On the other hand, when the position of the liquid level 10 of the polymer phase 8 moves downward, the detected signal comes to show a downward tendency to be below the intended value, so that the control valve 5 operates in the open direction. Then, the flow amount of the reaction liquid from the reaction vessel 1 into the still standing-separation vessel 3 increases, which results in an increase in the inflow of the polymer liquid, so that the liquid level 10 of the polymer phase 8 moves upward. These are repeated, and as a result, the liquid level 10 of the polymer phase 8 can be constantly and stably controlled to be in the intended liquid level position.

This embodiment uses the vibratile process viscometer 7 or the remote seal type differential pressure oscillator 6 as a liquid level detector. With the vibratile process viscometer 7, a portion where the viscosity changes from the polymer phase 8 to the solution phase 9 is detected as the liquid level 10 of the polymer phase 8. With the remote seal type differential pressure oscillator 6, further, the liquid level 10 of the polymer phase 8 can be detected in the range of 0 to 100 % on the basis of a difference in density between the polymer phase 8 and the solution phase 9, and the liquid level can be controlled to be in a desired position.

In this manner, in the first still standing-separation vessel 3, the liquid level 10 of the polymer phase 8 can be accurately detected.

The polymer phase 8 that is allowed to stand and separated in the first still standing-separation vessel 3 is taken out from a lower portion of the first still standing-separation vessel 3, and it is transferred to a second still standing-separation vessel 3 through a piping 2 together with a wash liquid again as required. In the second still standing-separation vessel 3, the same procedures as those in the first still standing-separation vessel 3 are carried out, and the liquid level 10 of a polymer phase 8 can be accurately detected. The polymer phase 8 that is allowed to stand and separated in the second still standing-separation vessel 3 is further transferred to a third still standing-separation vessel 3, and by the same procedures as those in the first still standing-separation vessel 3, the liquid level 10 of a polymer phase 8 can be accurately detected.

This embodiment uses the vibratile process viscometer 7 or remote seal type differential pressure oscillator 6 having the liquid-contact portion constituted of an anti-corrosion material, so that the liquid level 10 of the polymer phase 8 can be accurately detected for a long period of time even if the separation procedure is carried out in the aprotic organic solvent having high dissolving power such as NMP, or the like under high-temperature and high-pressure conditions.

Since the liquid level 10 of the polymer phase 8 can be accurately detected, the operation can be carried out while maintaining the liquid level 10 of the polymer phase 8 at a low level, the time period for which the polymer phase 8 resides can be controlled to be minimized, the time period for which the polymer phase is exposed to high temperatures can be minimized, and the decomposition, etc., of the polymer can be decreased, so that the polymer can be improved in quality.

Further, since liquid level fluctuations caused by external changes such as a pressure fluctuation can be minimized, the operation can be stabilized, so that the stabilization of the polymer quality can be accomplished.

In this embodiment, the liquid-contact portion of each of the vibratile process viscometers 7 or the remote seal type differential pressure oscillators 6 is formed of an anti-corrosion material. Further, each of those tubes of the still standing-separation vessels 3 to which these liquid level detectors are fitted and the liquid-contact portions of each column vessel, each piping 2, each control valve 5, etc., are formed of anti-corrosion material(s) as well.
In this embodiment, further, each piping 2 through which a polyarylene sulfide is transfered and each still standing-separation vessel 3 are preferably provided with a jacket structure for maintaining them at high temperatures. For example, as each piping 2, a double pipe, or the like, having an inner diameter of 1/2B and an outer diameter 1·1/2B is used. Further, since a slight amount of a polyarylene sulfide having a low molecular weight, i.e., a polyarylene sulfide oligomer, is contained on the solution phase side 9, it is preferred to use a double piping, or the like as a piping structure, while the operation can be carried out without using the double tube structure.

Examples

The present invention will be explained further in detail with reference to Examples hereinafter, while the present invention shall not be limited to these Examples.

Example 1

Synthesis of polyarylene sulfide

A raw material synthesis vessel (1 $m^3$) with a stirring blade was charged with 554 kg of N-methyl-2-pyrrolidone (NMP) and 100 kg of lithium hydroxide ($LiOH \cdot 1H_2O$), the mixture was temperature-increased, the temperature was maintained at 140°C, and water contained in the LiOH as a raw material was batch-distilled off. After the above procedure, while the temperature was maintained at 130°C, 65 Nkℓ of gaseous hydrogen sulfide ($H_2S$) was introduced by blowing. By this procedure, lithium hydrosulfide (LiSH) was synthesized according to the following expression (1).

$$LiOH + H_2S \rightarrow LiSH + H_2O \qquad (1)$$

Then, the introduction of hydrogen sulfide by blowing was terminated, and the synthesis vessel was temperature-increased up to 205°C again. As the temperature was increased, water by-produced during the introduction of the hydrogen sulfide was batch-distilled off, and a reaction according to the following expression (2) was caused to proceed, to synthesize lithium sulfide ($Li_2S$).

$$2LiSH \rightarrow Li_2S + H_2S\uparrow \qquad (2)$$

After completion of the reaction according to the above expression (2), 161 kg (1.05 kmol) of p-dichlorobenzene (PDCB) was charged, further, 5.3 kg of pure water was charged, a 210°C x 3 hours pre-condensation procedure was carried out, and then the synthesis vessel was cooled to 90°C. Then, 15.1 kg of PDCB and 88 kg of NMP were additionally added to formulate a raw material prepolymer.
A polymerization (260°C) was carried out using the raw material prepolymer formulated by the above procedure, to synthesize a polyarylene sulfide. In this case, the charging rate of the raw material prepolymer was set at 15.0 kg/hour.
A reaction liquid discharged from the reaction vessel was introduced into a first still standing-separation vessel (260°C), and it was allowed to stand and separated into a reaction liquid and a polyarylene sulfide phase. In this case, at an outlet of the reaction vessel, $NH_4Cl$ as a reaction stopper and a wash liquid ($H_2O$/NMP liquid mixture) for washing and removing lithium chloride contained in the polyarylene sulfide phase were injected. A wash liquid was also injected into a high-molecular-weight polyarylene sulfide taken from a bottom of the still standing-separation vessel, the wash liquid was again contact-mixed therewith, and the mixture was allowed to stand and separated in a second still standing-separation vessel. The above procedure for washing the polyarylene sulfide was repeatedly carried out at three stages to complete the washing, and the resulting polyarylene sulfide was introduced into an extruder with a ventilation function, to remove the volatile solvent (mainly, NMP). Then, it was cooled with water and pelletized to give a product. The output of the product was approximately 2 kg/hour.
In the above case, the still standing-separation vessels at three stages were provided with vibratile process viscometers (XL/7-150HT3, supplied by Hydramotion Limited) having liquid-contact portions formed of a Hastelloy alloy as a material each. The thus-obtained polyarylene sulfide was dissolved in α-chloronaphthalene so as to have a concentration of 0.4 g/dℓ and measured for a viscosity at a temperature of 206°C with an Ubbellohde viscometer. As a result, there were found conditions that permitted the production in the range of $\eta_{inh}$ = 0.15 to 0.28 by adjusting chemical ratios of raw materials, and the like.

Further, the polymer was sampled at the outlet from the reaction vessel, and at the same time, the polymer was similarly sampled at outlets from the still standing-separation vessels on the first-stage, second-stage and third-stage of the washing system and in the extruder. The polymer samples in these sites were measured for a molecular weight (a viscosity) each by the above method. Further, the polymer samples in these sites were measured for a viscosity each by the above method. As a result, it was found that the obtained polymer did not cause any decrease in molecular weight in any site, and that the operation was hence stably carried out. Table 1 shows the results.

Further, the Li concentration in the polymer was analyzed by means of an ICP-AES apparatus (inductively coupled plasma-atomic emission spectroscopy apparatus). AS a result, there were found operation conditions under which the Li concentration was controlled into 20 ppm or less by brining the conditions of the washing system into proper conditions.

Further, it was found that when the liquid level of the polymer phase was automatically controlled with the vibratile process viscometer, the above production apparatus required almost no operation by an operator and permitted working of stable automatic operations.

Example 2

A polyarylene sulfide was synthesized in the same manner as in Example 1 except that the vibratile process viscometers provided to the still standing-separation vessels were replaced with remote seal type differential pressure oscillators (JTE-929A, supplied by Yamatake Industrial Systems, Inc.) having liquid-contact portions formed of a Hastelloy alloy as a material each, and it was measured for viscosities and molecular weights in the same manner as in Example 1. Table 1 shows the results.

The viscosities and molecular weights of the polyarylene sulfide obtained in this Example were of similar values in any site, and it was found that the production apparatus had stable operation capability for a long period of time.

Comparative Example 1

A polyarylene sulfide was synthesized in the same manner as in Example 1 except that the vibratile process viscometers provided to the still standing-separation vessels were replaced with capacitance type liquid level detectors described in JP-A-09-328551, and it was measured for viscosities and molecular weights in the same manner as in Example 1. Table 1 shows the results.

In this Comparative Example, even if the polymer was produced so as to have an identical molecular weight in the outlet from the reaction vessel, the polymer was caused to have a decrease in molecular weight in each still standing-separation vessel of the washing system. This is a result from the following. The detection of the liquid level in each still standing-separation vessel was unstable and it was difficult to accurately detect the polymer level, so that the operation was carried out while the polymer liquid level was maintained at a little higher position. In this Comparative Example, it was found that the molecular weight decreased in the still standing-separation vessels in which the polymer residence time period was longer.

On the other hand, when the operation was carried out while the polymer liquid level was maintained at a little lower position, the deterioration of the polymer could be suppressed. However, the wash liquid level was not stabilized, so that the amount of Li remaining in the polymer in the outlet from the extruder increased to a great extent, as high as 200 to 500 ppm, which caused the product to be degraded in quality.

Table 1

| | | Example 1 | Example 2 | Comparative Example 1 |
|---|---|---|---|---|
| ηinh (dl/g) | Outlet from reaction vessel | 0.242 | 0.245 | 0.245 |
| | Outlet from 1st-stage SSSV* | 0.240 | 0.243 | 0.220 |
| | Outlet from Outlet from 2nd-stage SSSV* | 0.241 | 0.244 | 0.215 |
| | Outlet from 3rd-stage SSSV* | 0.243 | 0.245 | 0.180 |
| | Extruder | 0.241 | 0.242 | 0.175 |

SSSV* = Still standing-separation vessel

Industrial Utility

According to the present invention, there can be provided a method and an apparatus for the purification of a polyarylene sulfide, which can give a high-quality polyarylene sulfide.

## Claims

1. A method for purifying a polyarylene sulfide, which comprises washing a polyarylene sulfide with a wash liquid,
   separating the resulting mixture into a polymer phase containing said polyarylene sulfide and a solution phase containing said wash liquid,
   measuring a viscosity of said polymer phase or a difference in density between said polymer phase and said solution phase, to detect the liquid level of said polymer phase, and
   taking out the polyarylene sulfide.

2. The method for purifying a polyarylene sulfide as recited in claim 1, wherein the viscosity of said polymer phase is measured with a vibratile process viscometer.

3. The method for purifying a polyarylene sulfide as recited in claim 1, wherein the difference in density between said polymer phase and said solution phase is measured with a remote seal type differential pressure oscillator.

4. The method for purifying a polyarylene sulfide as recited in claim 2, wherein said vibratile process viscometer has a liquid-contact portion of which the material is an anti-corrosion material.

5. The method for purifying a polyarylene sulfide as recited in claim 4, wherein said anti-corrosion material is stainless steel, a hastelloy alloy, Ti or a Ti alloy.

6. The method for purifying a polyarylene sulfide as recited in claim 3, wherein said remote seal type differential pressure oscillator has a liquid-contact portion of which the material is an anti-corrosion material.

7. The method for purifying a polyarylene sulfide as recited in claim 6, wherein said anti-corrosion material is stainless steel, a hastelloy alloy, Ti or a Ti alloy.

8. An apparatus for purifying a polyarylene sulfide, which comprises a separation vessel for separating a polymer phase containing a polyarylene sulfide and a solution phase containing a wash liquid after the polyarylene sulfide is washed with the wash liquid, and
   a liquid level detector that is provided to said separation vessel and that is for measuring a viscosity of said polymer phase or a difference in density between said polymer phase and said solution phase to detect the liquid level of said polymer phase.

9. A method for producing a polyarylene sulfide, which comprises reacting an alkali metal sulfide and a halogenated aromatic compound to produce a polyarylene sulfide,
   washing said polyarylene sulfide with a wash liquid,
   separating the resulting solution into a polymer phase containing said polyarylene sulfide and a solution phase containing said wash liquid,
   measuring a viscosity of said polymer phase or a difference in density between said polymer phase and said solution phase to detect the liquid level of the polymer phase, and
   taking out said polymer phase.

10. A method for detecting a liquid level, which comprises measuring a first phase for a viscosity, to detect the liquid level that is an interface between the first liquid phase containing a polyarylene sulfide and a second liquid phase which substantially does not contain any polyarylene sulfide.

11. A method for detecting a liquid level, which comprises measuring a difference in density between a first phase and a second phase, to detect the liquid level that is an interface between the first liquid phase containing a polyarylene sulfide and a second liquid phase which substantially does not contain any polyarylene sulfide.

Fig.1

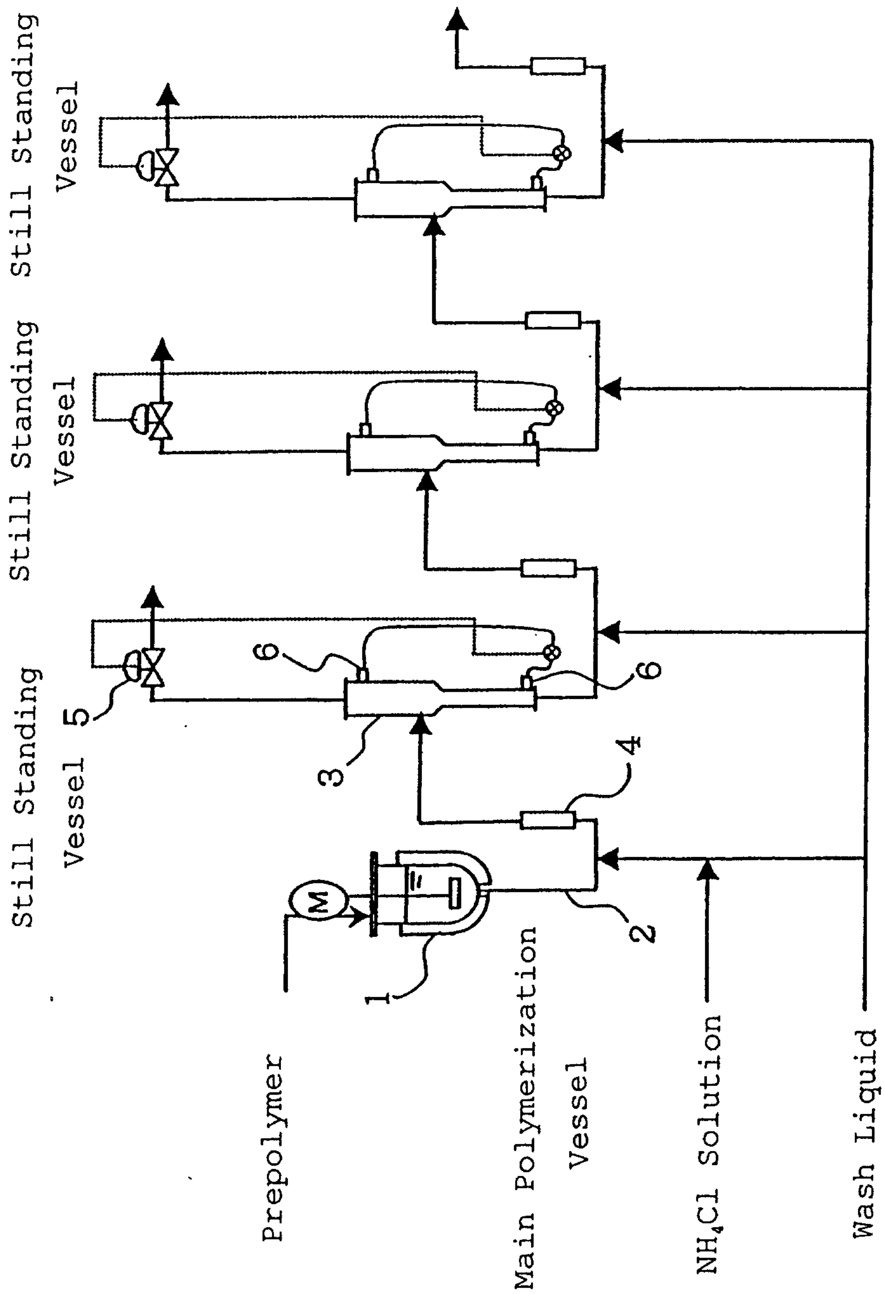

No.1
Still Standing
Vessel
No.2
Still Standing
Vessel
No.3
Still Standing
Vessel
M
1
2
3
4
5
6
6
Prepolymer
Main Polymerization
Vessel
NH4Cl Solution
Wash Liquid

Fig.2

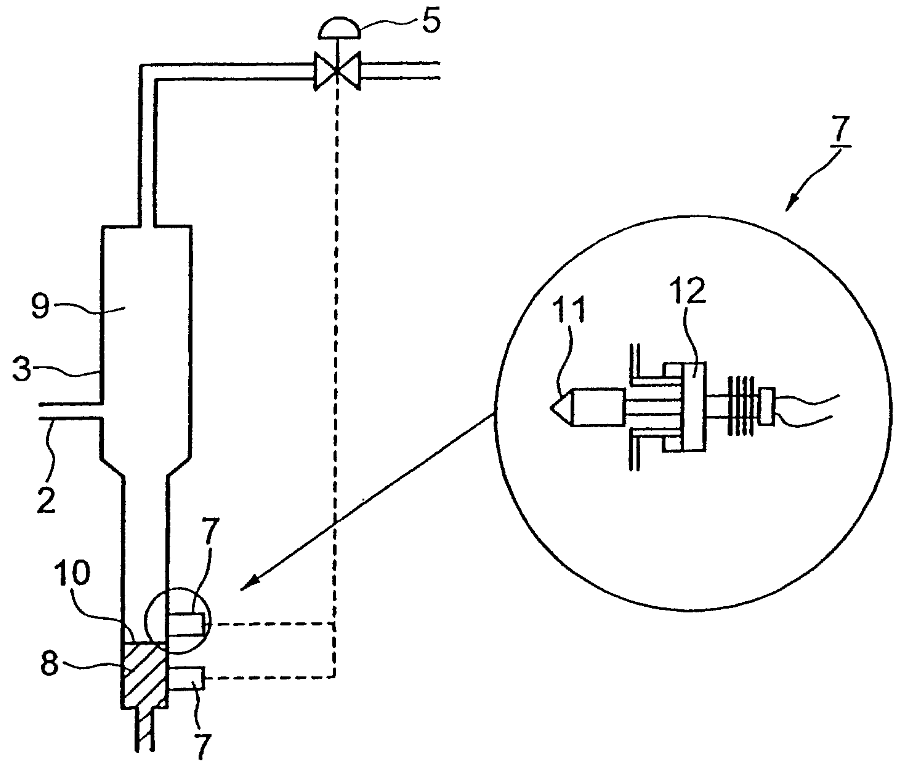


Fig.3

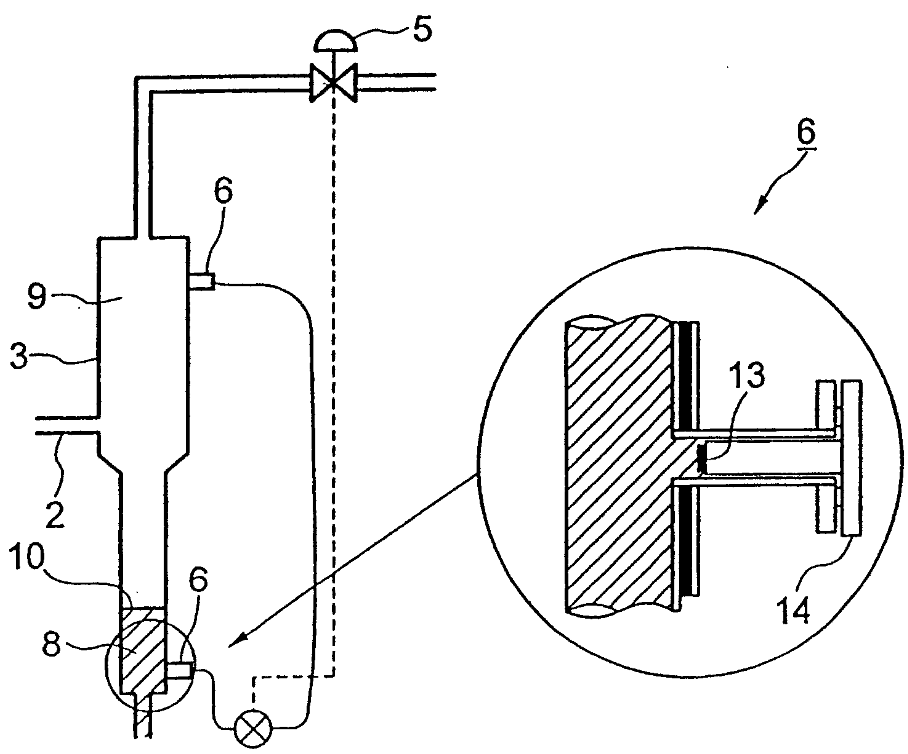

## INTERNATIONAL SEARCH REPORT

International application No.
PCT/JP03/03679

**A. CLASSIFICATION OF SUBJECT MATTER**
Int.Cl[7] C08G75/02

According to International Patent Classification (IPC) or to both national classification and IPC

**B. FIELDS SEARCHED**

Minimum documentation searched (classification system followed by classification symbols)
Int.Cl[7] C08G75/00-16

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 6-192422 A (Phillips Petroleum Co.), 12 July, 1994 (12.07.94), Claims; Par. Nos. [0027], [0028]<br>& DE 69308459 C & AU 4878893 A<br>& HU 66492 A & IL 107176 A<br>& CA 2104539 A1 & FI 934687 A<br>& CA 2108491 A & CA 2108492 A<br>& NO 933751 A & EP 594121 A1<br>& EP 594321 A1 & MX 9306398 A<br>& MX 9306397 A & CN 1086241 A<br>& CN 1086237 A & BR 9304316 A<br>& PL 300833 A & ZA 9307537 A<br>& JP 6-145590 A & BR 9304248 A<br>& SI 9300560 A & US 5334701 A1<br>& CZ 9302229 A & JP 6-316691 A<br>& SK 113993 A & AU 674876 B<br>& AT 149550 T & ES 2098676 T | 1-11 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 May, 2003 (06.05.03) | 20 May, 2003 (20.05.03) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP03/03679

C (Continuation). DOCUMENTS CONSIDERED TO BE RELEVANT

| Category* | Citation of document, with indication, where appropriate, of the relevant passages | Relevant to claim No. |
|---|---|---|
| | & GR 3022746 T & HK 1001063 A<br>& KR 250871 B & AT 210694 T | |
| Y | JP 9-328551 A (Idemitsu Petrochemical Co., Ltd.),<br>22 December, 1997 (22.12.97),<br>Claims; Par. No. [0009] | 1-11 |
| A | JP 62-252430 A (Dainippon Ink And Chemicals, Inc.),<br>04 November, 1987 (04.11.87),<br>Claims; page 4, lower right column, line 16 to page 5, upper left column, line 5<br>(Family: none) | 1-11 |
| A | JP 62-195022 A (Dainippon Ink And Chemicals, Inc.),<br>27 August, 1987 (27.08.87),<br>Claims<br>(Family: none) | 1-11 |

Form PCT/ISA/210 (continuation of second sheet) (July 1998)